# EUROPÄISCHE PATENTSCHRIFT

(11) **EP 4 561 854 B1**
(45) Veröffentlichungstag und Bekanntmachung des Hinweises auf die Patenterteilung: **11.11.2026**
(21) Anmeldenummer: 23736057.3
(22) Anmeldetag: 28.06.2023
(51) Int. Cl.: B60K 31/10, B60K 35/28, B60K 35/60, B62D 1/04, B62D 1/06

(54) **LENKRAD FÜR EIN KRAFTFAHRZEUG**
STEERING WHEEL FOR A MOTOR VEHICLE
VOLANT POUR VÉHICULE MOTORISÉ

(30) Priorität: 25.07.2022 DE 102022118474
(43) Veröffentlichungstag der Anmeldung: 04.06.2025
(73) Patentinhaber: Bayerische Motoren Werke Aktiengesellschaft, 80809 München (DE)
(72) Erfinder: SUSS, Daniel, 80337 München (DE); ZANDT, Johann, 85411 Hohenkammer (DE); REITER, Andreas, 85567 Grafing bei München (DE); SCHLUDER, Harald, 80637 München (DE); KNOLL, Christian, 80807 München (DE); LAUBER, Felix, 80634 München (DE); PLATTEN, Frederik, 80333 München (DE)
(86) Internationale Anmeldenummer: PCT/EP2023/067567
(87) Internationale Veröffentlichungsnummer: WO 2024/022706

(56) Entgegenhaltungen:
- FR-A1- 3 117 980
- US-A1- 2020 273 429
- US-A1- 2020 406 817

## Beschreibung

Die Erfindung betrifft ein Lenkrad für ein Kraftfahrzeug.

Zum Stand der Technik wird insbesondere auf die US 2020/406817 A1, die US 2020/273429 A1, die FR 3 117 980 A1 und die WO 2019/137699 A1 verwiesen.

In modernen Kraftfahrzeugen kommen zunehmend Systeme zum automatisierten Fahren zum Einsatz, wobei hier verschiedene Automatisierungsgrade möglich sind. Das Modell der Bundesanstalt für Straßenwesen (BASt) unterscheidet beispielsweise nach assistiertem, automatisiertem und autonomem Modus.

Darüber hinaus ist auch eine Einteilung in Automatisierungsgrade oder -level üblich. Der hier gültige Standard ist die SAE J3016 der SAE-International, die die Fahrfunktionen in die Level 0 bis 5 einteilt. Bis einschließlich Level 2 assistieren die Funktionen dem Fahrer. Hierunter fallen z.B. Funktionen wie automatisches Einparken, Spurhalten, allgemeine Längsführung, Beschleunigen und Abbremsen, die von Assistenzsystemen übernommen werden. Im Level 3, der dem automatisierten Modus entspricht, kann das Fahrzeug zeitweise selbstständig fahren, führt also z.B. auch selbstständig Funktionen wie das Auslösen des Blinkers, Spurwechsel und Spurhalten durch. Der Fahrer muss das System nicht ständig überwachen und kann sich zeitweilig anderen Dingen zuwenden, wird aber bei Bedarf vom System aufgefordert, die Führung zu übernehmen. In Deutschland erlaubt das Gesetz zum automatisierten Fahren bereits seit 2017 die Nutzung dieser technischen Möglichkeit. Ab Level 4 können Fahrzeuge selbstständig fahren, ohne dass der Fahrer übernehmen können muss, d.h. die Fahrfunktionen sind bei der Ausführung der Fahraufgabe autonom.

Automatisiertes Fahren ist üblicherweise nicht unter allen Straßen- und Umweltbedingungen möglich. So kann etwa bei einem Fahrsystem zum automatisierten Fahren auf der Autobahn vorgesehen sein, dass das Fahrzeug nur auf bestimmten dafür freigegebenen Streckenabschnitten der Autobahn automatisiert fahren kann. Bevor das Ende eines aktuell befahrenen, für das automatisierte Fahren freigegebenen Streckenabschnitts erreicht wird, muss der Fahrer die Fahrzeugführung vollständig oder teilweise übernehmen. Auch aufgrund von aktuellen Ereignissen wie z.B. einem Unfall, einem Stau oder einer Person auf der Autobahn kann sich ein Ende der Automatisierungsstrecke ergeben. Zudem muss der Fahrer bei Fahrsystemen zum automatisierten Fahren üblicherweise vor dem Abfahren von der Autobahn auf einen anderen Straßentyp die Fahrzeugführung übernehmen.

Daher ist es nötig, dass der Fahrer rechtzeitig vor einem bevorstehenden Ende des automatisierten Fahrens die Fahrzeugführung wieder vom Fahrsystem übernimmt. Hier gibt es verschiedene Möglichkeiten, den Fahrer zur Übernahme der Fahrzeugführung aufzufordern, z.B. visuelle Warnungen auf einer Anzeige, etwa einem Bildschirm, akustische oder haptische Warnungen.

Aus der WO 2019/137699 A1 beispielsweise ist ein Lenkrad für ein Kraftfahrzeug bekannt, bei dem auf einer dem Fahrer des Kraftfahrzeugs zugewandten Vorderseite eine Leuchteinrichtung in Form eines geschlossenen Rings in den Lenkradkranz eingesetzt ist, die den Fahrer informiert, dass sich das Kraftfahrzeug im automatisierten Fahrmodus bzw. im nicht-automatisierten Fahrmodus befindet und/oder dass ein Wechsel des Fahrmodus bevorsteht.

Eine solche direkt in den Lenkradkranz integrierte Lichtanzeige ist gut sichtbar und hat für den Fahrer einen hohen Aufforderungscharakter, da unmittelbar die Griffbereiche am Lenkrad beleuchtet werden können, die der Fahrer zur Übernahme der Fahrzeugkontrolle ergreifen soll. Nachteilig an der beschriebenen Ausgestaltung ist jedoch, dass die Einbettung einer Leuchteinrichtung in die Vorderseite des Lenkradkranzes die Unterbringung einer Lenkradheizung oder einer Sensorik zur Hands-On/Off-Detektion im Lenkradkranz erschwert. Auch haptisch ist eine solche vollumfänglich in die Vorderseite (und damit auch den Griffbereich) des Lenkradkranzes eingesetzte Leuchteinrichtung nicht ideal, da diese üblicherweise eine Abdeckung aus einem harten Kunststoff aufweist.

Es ist daher Aufgabe der Erfindung, ein Lenkrad für ein Kraftfahrzeug mit einer Leuchteinrichtung bereitzustellen, das sich durch eine verbesserte Ergonomie auszeichnet und dem Fahrer dennoch intuitiv die richtige Handlung zur Übernahme der Fahraufgabe vermittelt.

Erfindungsgemäß ist hierzu ein Lenkrad für ein Kraftfahrzeug vorgesehen, mit einem Lenkradkranz, der über wenigstens eine Lenkradspeiche mit einer Lenkradnabe verbunden ist und in einer durch den Lenkradkranz aufgespannten Ebene bezogen auf eine Geradeausfahrtstellung des Lenkrads auf der linken und auf der rechten Seite je einen nach innen zur Lenkradnabe hin vorspringenden, ersten Abschnitt sowie eine unmittelbar oberhalb daran anschließende Einbuchtung aufweist, die zusammen je einen Griffbereich mit einer Daumenauflage für einen Fahrer des Kraftfahrzeugs bilden, und einer Leuchteinrichtung, die wenigstens zwei erste und zwei zweite Leuchtelemente umfasst und mit der dem Fahrer eine Information ausgebbar ist, die einen Fahrzustand eines automatisiert betreibbaren Kraftfahrzeugs charakterisiert, wobei die vorspringenden ersten Abschnitte jeweils einen nach innen weisenden freien Endbereich aufweisen, an dem je ein erstes Leuchtelement der Leuchteinrichtung angeordnet ist, und wobei je ein zweites Leuchtelement der Leuchteinrichtung unmittelbar oberhalb der Einbuchtung in einem inneren Randbereich des Lenkradkranzes vorgesehen ist.

Somit ist beim erfindungsgemäßen Lenkrad die Leuchteinrichtung in den bzw. nahe der seitlichen Griffbereiche angeordnet, wodurch ein hoher Aufforderungscharakter gegeben ist, wenn das System zum automatisierten Fahren den Fahrer zur Übernahme der Fahrzeugkontrolle auffordert.

Da pro Seite zwei Leuchtelemente im inneren Randbereich des Lenkradkranzes vorgesehen und die vom Fahrer teilweise umgriffenen Einbuchtungen dabei ausgespart sind, werden die Leuchtelemente vom Fahrer beim Umgreifen des Lenkrads nicht berührt und somit auch nicht als haptisch unangenehm empfunden.

Zudem ist durch die Anordnung der Leuchtelemente im inneren Randbereich des Lenkradkranzes die Unterbringung einer Heizmatte für eine Lenkradheizung oder einer Sensormatte für eine Vorrichtung zur Hands-On/Off-Detektion gegenüber bekannten Lösungen aus dem Stand der Technik erleichtert, da diese Matten vorrangig im äußeren Randbereich sowie an Vorder- und Rückseite des Lenkradkranzes angeordnet sind.

Der Lenkradkranz muss dabei nicht kreisrund sein; vorzugsweise weist er eine abgerundete hexagonale bzw. eckige Form auf.

Insbesondere sind die nach innen vorspringenden ersten Abschnitte bezogen auf die außerhalb des Griffbereichs vorliegende, grundsätzliche Querschnittsdicke des Lenkradkranzes verbreitert, und der vorspringende erste Abschnitt bildet mit der Einbuchtung auf jeder Seite des Lenkradkranzes eine Art "Pistolengriff", der sich durch eine besonders vorteilhafte Ergonomie auszeichnet.

Das erfindungsgemäße Lenkrad weist dabei zumindest eine Lenkradspeiche auf, die vorzugsweise den in Geradeausfahrtstellung in der unteren Mitte liegenden Bereich des Lenkradkranzes (umgangssprachlich als 6-Uhr-Position bezeichnet) mit der Lenkradnabe verbindet. Zusätzlich kann eine weitere Lenkradspeiche vorgesehen sein, die dann bevorzugt gegenüberliegend angeordnet ist (12-Uhr-Position), also den in der oberen Mitte liegenden Bereich des Lenkradkranzes mit der Lenkradnabe verbindet. Im Bereich der vorspringenden ersten Abschnitte (also etwa in 3-Uhr-Position und 9-Uhr-Position) sind gemäß der bevorzugten Ausführung keine Lenkradspeichen vorhanden, es ist aber prinzipiell denkbar, etwa in Form von nach hinten versetzten Speichen.

An dieser Stelle sei darauf hingewiesen, dass im Sinne der Anmeldung das automatisierte Fahren bevorzugt über einen längeren Zeitabschnitt erfolgt, z.B. auf der Autobahn. Zudem ist hierunter grundsätzlich ein automatisiertes Fahren mit einem beliebigen Automatisierungsgrad zu verstehen, bei dem der Fahrer vor einem bevorstehenden Ende des automatisierten Fahrens in der Lage sein muss, die Fahraufgabe ganz oder zumindest teilweise zu übernehmen. Insbesondere ist das erfindungsgemäße Lenkrad für Fahrzeuge mit Level 3-Automatisierung vorgesehen.

Bevorzugt weist der Lenkradkranz bezogen auf die Geradeausfahrtstellung des Lenkrads auf der linken und auf der rechten Seite oberhalb der Einbuchtungen je einen weiteren nach innen zur Lenkradnabe hin vorspringenden, zweiten Abschnitt auf, in dessen Endbereich jeweils das zweite Leuchtelement angeordnet ist.

Dabei bilden der erste und der zweite vorspringende Abschnitt auf jeder Seite eine Verbreiterung des Lenkradkranzes, die durch die dazwischenliegende Einbuchtung unterbrochen ist. Insbesondere liegen diese Verbreiterungen in Geradeausfahrtstellung, wenn die obere Mitte des Lenkradkranzes mit 0° bezeichnet wird, im Bereich von etwa 40° bis 120° (rechts) und 240° bis 320° (links).

Vorteilhaft liegen das bezogen auf die Geradeausfahrtstellung des Lenkrads auf derselben Seite angeordnete erste und zweite Leuchtelement jeweils auf einer gedachten Linie, die durch die Einbuchtung unterbrochen ist, oder auf zwei gedachten zueinander parallelen Linien. Eine solche Anordnung ist optisch an das Aussehen einer Fahrbahnbegrenzung angelehnt, wodurch dem Fahrer intuitiv die richtige Handlung zur Übernahme der Fahraufgabe vermittelt wird.

Um die Sichtbarkeit zu erhöhen und eine besonders hohe Signalwirkung zu erzielen, sind die Leuchtelemente bevorzugt so ausgebildet, dass eine Lichtabstrahlung auf einer dem Fahrer zugewandten Vorderseite des Lenkradkranzes erfolgt, insbesondere wobei die Leuchtelemente auf einer dem Fahrer abgewandten Rückseite und/oder an einem inneren Umfang des Lenkradkranzes eine Maskierung aufweisen.

In einer Weiterbildung ist bezogen auf die Geradeausfahrtstellung des Lenkrads auf der linken und auf der rechten Seite je ein Bedienbereich vorgesehen, der jeweils wenigstens ein Bedienelement aufweist, wobei sich die Bedienbereiche ausgehend von einem Lenkradzentrum in der durch den Lenkradkranz aufgespannten Ebene nach außen zum Lenkradkranz hin erstrecken, jedoch nicht mit diesem verbunden sind und von diesem seitlich beabstandet sind. Dadurch ergeben sich links und rechts je ein "freischwebender" Bedienbereich, der vom Fahrer problemlos erreicht werden kann, ohne die Hand von Lenkradkranz zu nehmen.

Bevorzugt haben die Bedienbereiche nach außen zum Lenkradkranz hin weisende freie Enden, und die freien Endbereiche der vom Lenkradkranz nach innen vorspringenden ersten Abschnitte, an denen die ersten Leuchtelemente angeordnet sind, liegen den freien Enden der Bedienbereiche zumindest abschnittweise gegenüber und sind insbesondere von diesen beabstandet. Die Bedienbereiche und die nach innen vorspringenden ersten Abschnitte bilden quasi unterbrochene "Speichen" ohne Tragfunktion seitlich in 3-Uhr-Position und 9-Uhr-Position.

Vorzugsweise weist der Lenkradkranz eine Trägerstruktur, die von einer Umschäumung umgeben ist, sowie einen Überzug auf. Bei dem Überzug handelt es sich insbesondere um eine Belederung, die Trägerstruktur ist z.B. ein Magnesiumskelett.

In einer bevorzugten Ausgestaltung der Erfindung weist jedes Leuchtelement eine in die Umschäumung des Lenkradkranzes eingebettete erste Baugruppe und eine zweite Baugruppe auf, die in die erste Baugruppe eingesetzt und mit dieser verbunden, insbesondere mit dieser verklipst, ist. Dadurch ergeben sich eine einfache Montage und eine vorteilhafte Optik, wobei die zweite Baugruppe vorzugsweise erst nach dem Aufbringen des Überzugs montiert wird.

Eine optisch und haptisch ansprechende Ausgestaltung erhält man, wenn die Leuchtelemente gegenüber dem Überzug zurückgesetzt sind. Auf diese Weise ist der vergleichsweise harte Kunststoff der Leuchtelemente für den Fahrer nicht spürbar, und die Leuchtelemente sind auf dezente Arte und Weise in das Lenkrad integriert.

In einer Weiterbildung der Erfindung ist ein mattenförmiges Heizelement und/oder Sensorelement vorgesehen, das zumindest abschnittsweise im Bereich eines Außenumfangs und/oder einer dem Fahrer zugewandten Vorderseite des Lenkradkranzes unter dem Überzug angeordnet ist und zumindest in den Bereichen der Leuchtelemente ausgespart ist.

Das Sensorelement ist vorzugsweise eine kapazitive Sensormatte einer Hands-On/Off-Detektionsvorrichtung. In diesem Fall lässt sich mit der erfindungsgemäßen Ausgestaltung dem Fahrer nicht nur zuverlässig die richtige Handlung zur Übernahme der Fahraufgabe vermitteln, sondern auch seine Übernahme erfassen.

Weitere Merkmale und Vorteile ergeben sich aus der nachfolgenden Beschreibung einer bevorzugten Ausführungsform anhand der beigefügten Zeichnungen. In diesen zeigt:
- Figur 1 eine Draufsicht auf ein erfindungsgemäßes Lenkrad;
- Figur 2 eine Draufsicht auf einen Lenkradkranz des Lenkrads aus Figur 1;
- Figur 3 eine Schnittansicht des Lenkradkranzes entlang der Linie A-A in Figur 2;
- Figur 4 eine Schnittansicht des Lenkradkranzes entlang der Linie B-B in Figur 2;
- Figur 5 eine perspektivische Ansicht des Lenkradkranzes aus Figur 2; und
- Figur 6 eine Draufsicht auf den Lenkradkranz aus Figur 2, die die Montage mehrerer Leuchtelemente einer Leuchteinrichtung veranschaulicht.

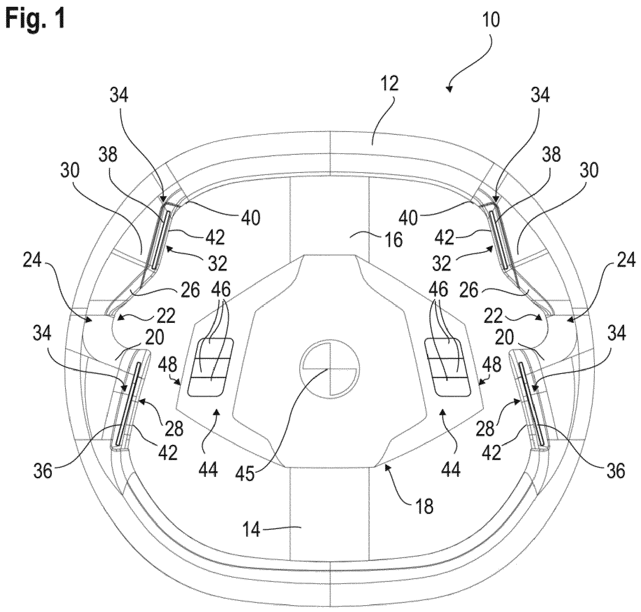

Figur 1 zeigt ein erfindungsgemäßes Lenkrad 10 für ein Kraftfahrzeug, das insbesondere in einem automatisiert betreibbaren Fahrzeug Verwendung findet.

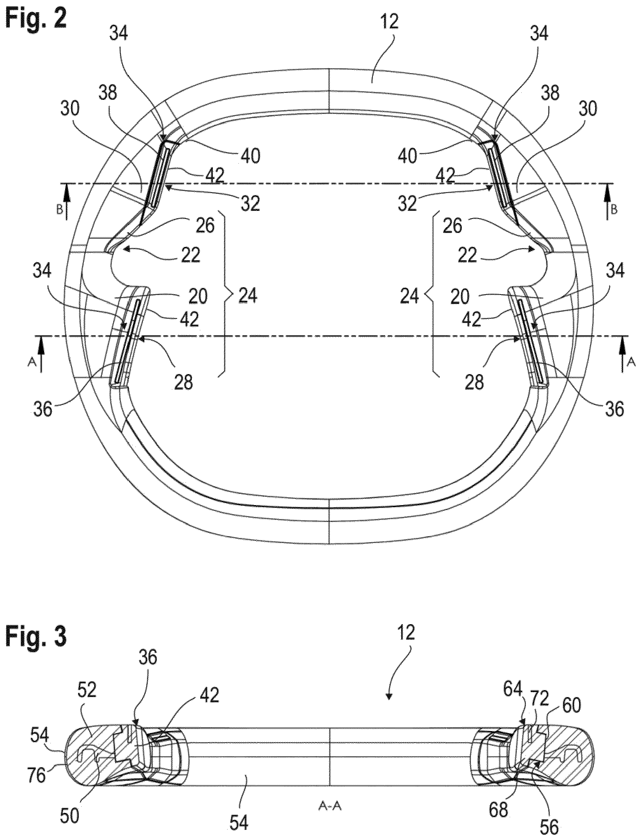

Das Lenkrad 10 weist einen Lenkradkranz 12 auf, der in den Figuren 2 bis 5 noch einmal separat gezeigt ist und über wenigstens eine, hier zwei Lenkradspeichen 14, 16 mit einer Lenkradnabe 18 verbunden ist. Dabei erstreckt sich die Lenkradspeiche 14 in der gezeigten Geradeausfahrtstellung des Lenkrads 10 zwischen dem in der unteren Mitte des Lenkradkranzes 12 liegenden Bereich (umgangssprachlich als 6-Uhr-Position bezeichnet) und der Lenkradnabe 18, während die Lenkradspeiche 16 gegenüberliegend angeordnet ist, also den auch als 12-Uhr-Position bezeichneten, in der oberen Mitte liegenden Bereich des Lenkradkranzes 12 mit der Lenkradnabe 18 verbindet.

In der durch den Lenkradkranz 12 aufgespannten Ebene, die in Figur 1 der Zeichenebene entspricht, hat der Lenkradkranz 12 bezogen auf die hier gezeigte Geradeausfahrtstellung des Lenkrads 10 auf der linken und auf der rechten Seite je einen nach innen zur Lenkradnabe 18 hin vorspringenden ersten Abschnitt 20, an den sich unmittelbar oberhalb eine Einbuchtung 22 anschließt. Der vorspringende erste Abschnitt 20 und die daran anschließende Einbuchtung 22 bilden zusammen jeweils einen Griffbereich 24 mit einer Daumenauflage 26 für einen Fahrer des Kraftfahrzeugs, wobei der Griffbereich 24 in etwa die Form eines Pistolengriffs hat.

Die beiden nach innen vorspringenden ersten Abschnitte 20 haben jeweils einen nach innen weisenden freien Endbereich 28.

Oberhalb der Einbuchtungen 22 weist der Lenkradkranz 12 zudem je einen weiteren nach innen zur Lenkradnabe 18 hin vorspringenden, zweiten Abschnitt 30 auf, dessen Endbereich 32 ebenfalls zur Lenkradnabe 18 bzw. zur gegenüberliegenden Seite des Lenkrads 10 hin zeigt.

Die beiden vorspringenden Abschnitte 20, 30 bilden auf jeder Seite des Lenkrads 10 eine Verbreiterung des Lenkradkranzes 12, die durch die dazwischenliegende Einbuchtung 22 unterbrochen ist. Bei der gezeigten Ausgestaltung liegen diese Verbreiterungen in Geradeausfahrtstellung im Bereich von etwa 40° bis 120° (rechts) und 240° bis 320° (links), wenn die obere Mitte des Lenkradkranzes 12 mit 0° bezeichnet wird.

Weiterhin umfasst das Lenkrad 10 eine Leuchteinrichtung 34, mit der dem Fahrer eine Information ausgegeben werden kann, die einen Fahrzustand des automatisiert betreibbaren Kraftfahrzeugs charakterisiert. Die Leuchteinrichtung 34 umfasst zwei erste Leuchtelemente 36 und zwei zweite Leuchtelemente 38, wobei die beiden ersten Leuchtelemente 36 an den freien Endbereichen 28 der nach innen vorspringenden ersten Abschnitte 20 angeordnet sind.

Die beiden zweiten Leuchtelemente 38 sind jeweils unmittelbar oberhalb der Einbuchtung 22 in einem inneren Randbereich 40 des Lenkradkranzes 12 vorgesehen, hier im Endbereich 32 des jeweiligen vorspringenden zweiten Abschnitts 30 angeordnet.

Wie aus den Figuren ersichtlich ist, ist der Lenkradkranz 12 nicht kreisrund, sondern weist im Wesentlichen eine abgerundet hexagonale Form auf.

Dabei liegen das auf derselben Seite des Lenkrads 10 angeordnete erste Leuchtelement 36 und das zweite Leuchtelement 38 jeweils auf zwei gedachten zueinander parallelen Linien, die durch die Einbuchtung 22 unterbrochen sind. Diese Anordnung erinnert an das Aussehen einer Fahrbahnbegrenzung, wodurch sich ein besonders hoher Aufforderungscharakter an den Fahrer ergibt.

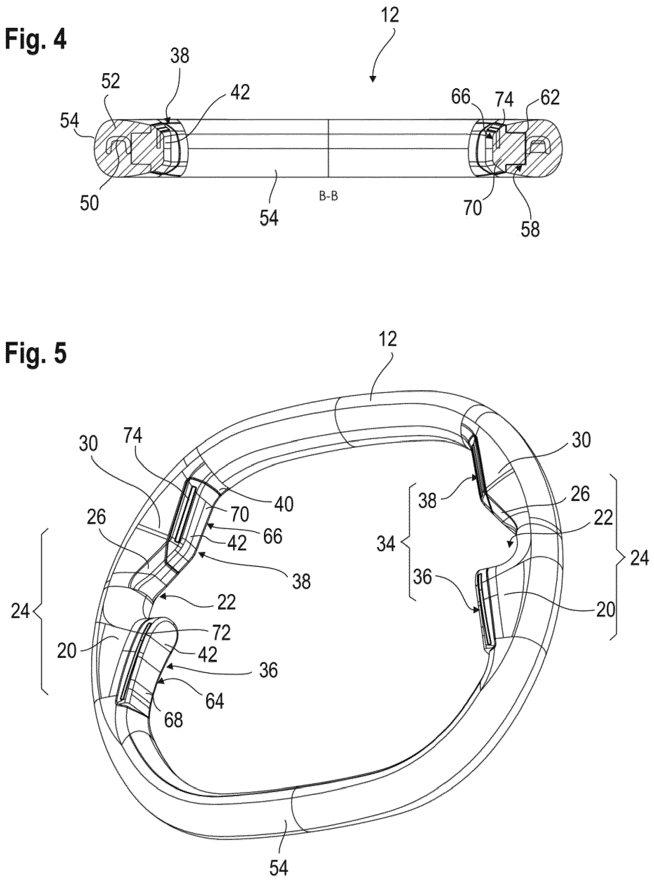

Die Leuchtelemente 36, 38 sind so ausgebildet, dass eine Lichtabstrahlung zumindest vorrangig auf einer dem Fahrer zugewandten Vorderseite des Lenkradkranzes 12 erfolgt. Dies wird dadurch erreicht, dass die Leuchtelemente 36, 38 auf ihrer dem Fahrer abgewandten Rückseite sowie am inneren Umfang des Lenkradkranzes 12 eine Maskierung 42 aufweisen (siehe hierzu auch Figur 5).

Alternativ zur hier gezeigten Ausgestaltung können die Leuchtelemente 36, 38 auch eine andere Form aufweisen oder in der Oberfläche nicht in Linienform maskiert sein, sondern zum Beispiel in einer Reihe von Punkten oder ähnlichem.

Weiterhin ist am Lenkrad 10 auf der linken und auf der rechten Seite (bezogen auf die Geradeausfahrtstellung) je ein Bedienbereich 44 vorgesehen, der jeweils mehrere Bedienelemente 46 aufweist, wobei sich die beiden Bedienbereiche 44 ausgehend von einem Lenkradzentrum 45 in der durch den Lenkradkranz 12 aufgespannten Ebene nach außen zum Lenkradkranz 12 hin erstrecken, jedoch nicht mit diesem verbunden sind und von diesem seitlich beabstandet sind. Dadurch ergeben sich auf beiden Seiten quasi "freischwebende" Bedienbereiche 44. Diese können vom Fahrer problemlos erreicht werden, ohne die Hand von Lenkradkranz 12 zu nehmen.

Die beiden Bedienbereiche 44 haben nach außen zum Lenkradkranz 12 hin weisende freie Enden 48, wobei die freien Endbereiche 28 der vom Lenkradkranz 12 nach innen vorspringenden ersten Abschnitte 20, an denen die ersten Leuchtelemente 36 angeordnet sind, diesen freien Enden 48 der Bedienbereiche 44 abschnittsweise gegenüberliegen, jedoch von diesen beabstandet sind (siehe Figur 1).

Wie in den Schnittansichten der Figuren 3 und 4 erkennbar ist, weist der Lenkradkranz 12 des Lenkrads 10 eine Trägerstruktur 50 in Form eines Magnesiumskeletts auf, die von einer Umschäumung 52 umgeben ist. Die Umschäumung 52 ist wiederum auf der Außenseite des Lenkradkranzes 12 durch einen Überzug 54, insbesondere eine Belederung, verdeckt.

Sowohl die ersten Leuchtelemente 36 als auch die zweiten Leuchtelemente 38 weisen eine in die Umschäumung 52 des Lenkradkranzes 12 eingebettete erste Baugruppe 56 bzw. 58 auf, die jeweils zumindest eine Unterschale 60 bzw. 62 umfasst, die (gegebenenfalls zusammen mit weiteren Komponenten der ersten Baugruppe 56 bzw. 58 wie einer Trägerplatine, Verkabelung etc.) beim Umschäumen der Trägerstruktur 50 mit eingeschäumt wird. Die vorspringenden ersten und zweiten Abschnitte 20 bzw. 30 bieten hierfür ausreichend Bauraum.

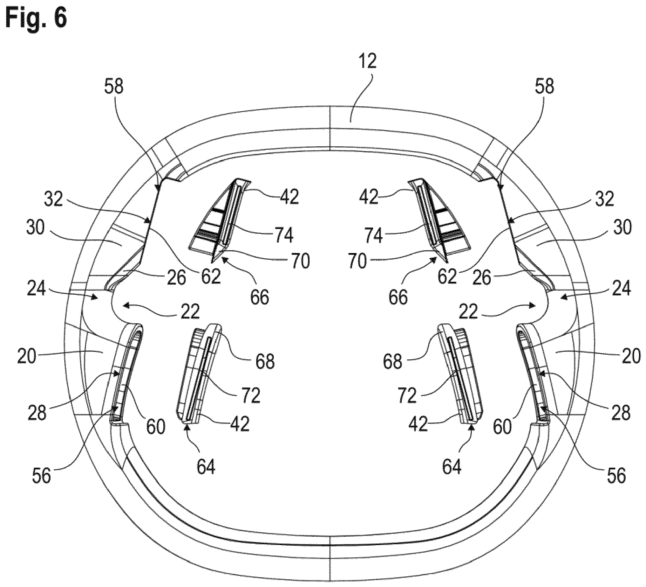

Weiterhin weist jedes der Leuchtelemente 36, 38 eine zweite Baugruppe 64 bzw. 66 auf, die ein Einsatzelement 68 bzw. 70 aus Kunststoff sowie einen darin eingesetzten Lichtleiter 72 bzw. 74 umfasst. Die zweite Baugruppe 64 bzw. 66 wird jeweils nach dem Aufbringen des Überzugs 54 in die erste Baugruppe 56 bzw. 58 eingesetzt und mit dieser verbunden, insbesondere mit dieser verklipst, wie in Figur 6 veranschaulicht ist.

Die Leuchtelemente 36, 38 sind dabei vorzugsweise gegenüber dem Überzug 54 geringfügig in Richtung zur Trägerstruktur 50 hin zurückgesetzt, sodass der relativ harte Kunststoff der Leuchtelemente 36, 38 (bzw. der Einsatzelemente 68 bzw. 70) vom Fahrer beim Umgreifen des Lenkrads 10 nicht bzw. weniger spürbar ist.

Weiterhin kann ein mattenförmiges Heizelement und/oder Sensorelement für eine Hands-On/Off-Detektion vorgesehen sein, das in Figur 3 mit dem Bezugszeichen 76 angedeutet ist. Dieses ist abschnittsweise oder entlang des gesamten Lenkradkranzes 12 im Bereich eines Außenumfangs und/oder der dem Fahrer zugewandten Vorderseite und/oder der Rückseite des Lenkradkranzes 12 unter dem Überzug 54 angeordnet und zumindest in den Bereichen der Leuchtelemente 36, 38 ausgespart.

## Patentansprüche

1. Lenkrad für ein Kraftfahrzeug, mit
einem Lenkradkranz (12), der über wenigstens eine Lenkradspeiche (14, 16) mit einer Lenkradnabe (18) verbunden ist und in einer durch den Lenkradkranz (12) aufgespannten Ebene bezogen auf eine Geradeausfahrtstellung des Lenkrads (10) auf der linken und auf der rechten Seite je einen nach innen zur Lenkradnabe (18) hin vorspringenden, ersten Abschnitt (20) sowie eine unmittelbar oberhalb daran anschließende Einbuchtung (22) aufweist, die zusammen je einen Griffbereich (24) mit einer Daumenauflage (26) für einen Fahrer des Kraftfahrzeugs bilden, und
einer Leuchteinrichtung (34), die wenigstens zwei erste und zwei zweite Leuchtelemente (36, 38) umfasst und mit der dem Fahrer eine Information ausgebbar ist, die einen Fahrzustand eines automatisiert betreibbaren Kraftfahrzeugs charakterisiert,
wobei die vorspringenden ersten Abschnitte (20) jeweils einen nach innen weisenden freien Endbereich (28) aufweisen, an dem je ein erstes Leuchtelement (36) der Leuchteinrichtung (34) angeordnet ist, und
wobei je ein zweites Leuchtelement (38) der Leuchteinrichtung (34) unmittelbar oberhalb der Einbuchtung (22) in einem inneren Randbereich (40) des Lenkradkranzes (12) vorgesehen ist.

2. Lenkrad nach Anspruch 1, **dadurch gekennzeichnet, dass** der Lenkradkranz (12) bezogen auf die Geradeausfahrtstellung des Lenkrads (10) auf der linken und auf der rechten Seite oberhalb der Einbuchtungen (22) je einen nach innen zur Lenkradnabe (18) hin vorspringenden, zweiten Abschnitt (30) aufweist, in dessen Endbereich (32) jeweils das zweite Leuchtelement (38) angeordnet ist.

3. Lenkrad nach Anspruch 1 oder 2, **dadurch gekennzeichnet, dass** das bezogen auf die Geradeausfahrtstellung des Lenkrads (10) auf derselben Seite angeordnete erste und zweite Leuchtelement (36, 38) jeweils auf einer gedachten Linie liegen, die durch die Einbuchtung (22) unterbrochen ist, oder auf zwei gedachten zueinander parallelen Linien.

4. Lenkrad nach einem der vorhergehenden Ansprüche, **dadurch gekennzeichnet, dass** die Leuchtelemente (36, 38) so ausgebildet sind, dass eine Lichtabstrahlung auf einer dem Fahrer zugewandten Vorderseite des Lenkradkranzes (12) erfolgt, insbesondere wobei die Leuchtelemente (36, 38) auf einer dem Fahrer abgewandten Rückseite und/oder an einem inneren Umfang des Lenkradkranzes (12) eine Maskierung (42) aufweisen.

5. Lenkrad nach einem der vorhergehenden Ansprüche, **dadurch gekennzeichnet, dass** bezogen auf die Geradeausfahrtstellung des Lenkrads (10) auf der linken und auf der rechten Seite je ein Bedienbereich (44) vorgesehen ist, der jeweils wenigstens ein Bedienelement (46) aufweist, wobei sich die Bedienbereiche (44) ausgehend von einem Lenkradzentrum (45) in der durch den Lenkradkranz (12) aufgespannten Ebene nach außen zum Lenkradkranz (12) hin erstrecken, jedoch nicht mit diesem verbunden sind und von diesem seitlich beabstandet sind.

6. Lenkrad nach Anspruch 5, **dadurch gekennzeichnet, dass** die Bedienbereiche (44) nach außen zum Lenkradkranz (12) hin weisende freie Enden (48) haben und dass die freien Endbereiche (28) der vom Lenkradkranz (12) nach innen vorspringenden ersten Abschnitte (20), an denen die ersten Leuchtelemente (36) angeordnet sind, den freien Enden (48) der Bedienbereiche (44) zumindest abschnittweise gegenüberliegen und insbesondere von diesen beabstandet sind.

7. Lenkrad nach einem der vorhergehenden Ansprüche, **dadurch gekennzeichnet, dass** der Lenkradkranz (12) eine Trägerstruktur (50), die von einer Umschäumung (52) umgeben ist, sowie einen Überzug (54) aufweist.

8. Lenkrad nach Anspruch 7, **dadurch gekennzeichnet, dass** jedes Leuchtelement (36, 38) eine in die Umschäumung (52) des Lenkradkranzes (12) eingebettete erste Baugruppe (56, 58) und eine zweite Baugruppe (64, 66) aufweist, die in die erste Baugruppe (56, 58) eingesetzt und mit dieser verbunden, insbesondere mit dieser verklipst, ist.

9. Lenkrad nach Anspruch 7 oder 8, **dadurch gekennzeichnet, dass** die Leuchtelemente (36, 38) gegenüber dem Überzug (54) zurückgesetzt sind.

10. Lenkrad nach einem der Ansprüche 7 bis 9, **dadurch gekennzeichnet, dass** ein mattenförmiges Heizelement und/oder Sensorelement (76) vorgesehen ist, das zumindest abschnittsweise im Bereich eines Außenumfangs und/oder einer dem Fahrer zugewandten Vorderseite des Lenkradkranzes (12) unter dem Überzug (54) angeordnet ist und zumindest in den Bereichen der Leuchtelemente (36, 38) ausgespart ist.

## Claims

1. Steering wheel for a motor vehicle, comprising
a steering wheel rim (12) which is connected to a steering wheel hub (18) via at least one steering wheel spoke (14, 16) and, in a plane spanned by the steering wheel rim (12), has on the left-hand side and on the right-hand side with respect to a straight-ahead position of the steering wheel (10), a respective first section (20) projecting inwards towards the steering wheel hub (18) and an indentation (22) immediately above it, which together form a respective grip region (24) with a thumb rest (26) for a driver of the motor vehicle, and
a lighting device (34), which comprises at least two first and two second light elements (36, 38) and with which the driver can be provided with information which characterizes a driving state of a motor vehicle that can be operated in an automated manner,
wherein the projecting first sections (20) each have a free end region (28) pointing inwards, on each of which a first light element (36) of the light device (34) is arranged, and
wherein a second light element (38) of the light device (34) is provided directly above the indentation (22) in an inner edge region (40) of the steering wheel rim (12).

2. Steering wheel according to Claim 1, **characterized in that** the steering wheel rim (12) has, on the left-hand side and on the right-hand side with respect to the straight-ahead position of the steering wheel (10), above the indentations (22), a respective second section (30) which projects inwards towards the steering wheel hub (18) and in the end region (32) of which the second light element (38) is arranged in each case.

3. Steering wheel according to Claim 1 or 2, **characterized in that** the first and second light elements, (36, 38) arranged on the same side with respect to the straight-ahead position of the steering wheel (10), each lie on an imaginary line which is interrupted by the indentation (22), or on two imaginary lines parallel to one another.

4. Steering wheel according to one of the preceding claims, **characterized in that** the light elements (36, 38) are designed in such a way that light is emitted on a front side of the steering wheel rim (12) facing the driver, in particular wherein the light elements (36, 38) have a masking (42) on a rear side facing away from the driver and/or on an inner circumference of the steering wheel rim (12).

5. Steering wheel according to one of the preceding claims, **characterized in that** on the left-hand side and on the right-hand side with respect to the straight-ahead position of the steering wheel (10), a respective operating region (44) is provided which has at least one operating element (46), wherein the operating regions (44) extend outwards from a steering wheel center (45) in the plane spanned by the steering wheel rim (12) towards the steering wheel rim (12), but are not connected thereto and are laterally spaced apart therefrom.

6. Steering wheel according to claim 5, **characterized in that** the operating regions (44) have free ends (48) pointing outwards towards the steering wheel rim (12), and **in that** the free end regions (28) of the first sections (20) projecting inwards from the steering wheel rim (12), on which the first light elements (36) are arranged, lie opposite the free ends (48) of the operating regions (44) at least in sections and, in particular, are spaced apart therefrom.

7. Steering wheel according to one of the preceding claims, **characterized in that** the steering wheel rim (12) has a support structure (50), which is surrounded by a foaming (52), and a cover (54).

8. Steering wheel according to claim 7, **characterized in that** each light element (36, 38) has a first assembly (56, 58) embedded in the foaming (52) of the steering wheel rim (12) and a second assembly (64, 66) which is inserted into the first assembly (56, 58) and connected thereto, in particular clipped thereto.

9. Steering wheel according to claim 7 or 8, **characterized in that** the light elements (36, 38) are set back relative to the cover (54).

10. Steering wheel according to one of claims 7 to 9, **characterized in that** a mat-shaped heating element and/or sensor element (76) is provided, which is arranged under the cover (54) at least in sections in the region of an outer circumference and/or a front side of the steering wheel rim (12) facing the driver and is recessed at least in the regions of the light elements (36, 38).

## Revendications

1. Volant de direction pour un véhicule à moteur, avec une jante (12) de volant de direction, qui est reliée à un moyeu (18) de volant de direction par au moins un rayon (14, 16) de volant de direction et qui comporte, dans un plan formé par la jante (12) de volant de direction, par rapport à une position de marche en ligne droite du volant de direction (10), sur le côté gauche et sur le côté droit, une première section (20) faisant saillie vers l'intérieur par rapport au moyeu (18) de volant de direction ainsi qu'une échancrure (22) adjacente directement au-dessus de celle-ci, lesquelles forment ensemble une zone de préhension (24) avec un repose-pouce (26) pour un conducteur du véhicule à moteur, et
un dispositif d'éclairage (34), qui comprend au moins deux premiers et deux deuxièmes éléments d'éclairage (36, 38), et qui permet de délivrer au conducteur des informations, qui caractérisent un état de conduite d'un véhicule à moteur à fonctionnement automatique,
les premières sections (20) faisant saillie comportant chacune une zone d'extrémité (28) libre pointant vers l'intérieur, sur laquelle un premier élément d'éclairage (36) du dispositif d'éclairage (34) est disposé, et
un deuxième élément d'éclairage (38) du dispositif d'éclairage (34) étant prévu directement au-dessus de l'échancrure (22) dans une zone de bord intérieure (40) de la jante (12) de volant de direction.

2. Volant de direction selon la revendication 1, **caractérisé en ce que** la jante (12) de volant de direction comporte, par rapport à la position de marche en ligne droite du volant de direction (10), sur le côté gauche et sur le côté droit au-dessus des échancrures (22), respectivement une seconde section (30) faisant saillie vers l'intérieur en direction du moyeu (18) de volant de direction, dans la zone d'extrémité (32) de laquelle est disposé respectivement le deuxième élément d'éclairage (38).

3. Volant de direction selon la revendication 1 ou 2, **caractérisé en ce que** le premier et le deuxième élément d'éclairage (36, 38) disposés du même côté par rapport à la position de marche en ligne droite du volant de direction (10) se trouvent chacun sur une ligne imaginaire, qui est interrompue par l'échancrure (22), ou sur deux lignes imaginaires parallèles l'une à l'autre.

4. Volant de direction selon l'une des revendications précédentes, **caractérisé en ce que** les éléments d'éclairage (36, 38) sont formés de telle sorte que de la lumière est émise sur un côté avant de la jante (12) de volant de direction tourné vers le conducteur, en particulier, les éléments d'éclairage (36, 38) comportant sur un côté arrière opposé au conducteur et/ou sur une périphérie intérieure de la jante (12) de volant de direction un masque (42).

5. Volant de direction selon l'une des revendications précédentes, **caractérisé en ce qu'**est prévue, par rapport à la position de marche en ligne droite du volant de direction (10), sur le côté gauche et sur le côté droit, respectivement une zone de commande (44), qui comporte chacune au moins un élément de commande (46), les zones de commande (44) s'étendant dans le plan formé par la jante (12) de volant de direction en partant d'un centre (45) de volant de direction vers l'extérieur en direction de la jante (12) de volant de direction sans toutefois être reliées à celle-ci et étant espacées latéralement de celle-ci.

6. Volant de direction selon la revendication 5, **caractérisé en ce que** les zones de commande (44) ont des extrémités (48) libres pointant vers l'extérieur en direction de la jante (12) de volant de direction et que les zones d'extrémité libres (28) des premières sections (20) faisant saillie vers l'intérieur depuis la jante (12) de volant de direction, sur lesquelles sont disposés les premiers éléments d'éclairage (36), font face au moins par sections aux extrémités libres (48) des zones de commande (44) et sont espacées en particulier de celles-ci.

7. Volant de direction selon l'une des revendications précédentes, **caractérisé en ce que** la jante (12) de volant de direction comporte une structure de support (50), qui est entourée d'un enrobage en mousse (52), ainsi qu'un revêtement (54).

8. Volant de direction selon la revendication 7, **caractérisé en ce que** chaque élément d'éclairage (36, 38) comporte un premier ensemble (56, 58) intégré dans l'enrobage en mousse (52) de la jante (12) de volant de direction et un deuxième ensemble (64, 66), qui est inséré dans le premier ensemble (56, 58) et est relié à celui-ci, en particulier est assemblé par clipsage à celui-ci.

9. Volant de direction selon la revendication 7 ou 8, **caractérisé en ce que** les éléments d'éclairage (36, 38) sont placés en retrait par rapport au revêtement (54).

10. Volant de direction selon l'une des revendications 7 à 9, **caractérisé en ce que** sont prévus un élément chauffant et/ou un élément capteur (76) en forme de mat, qui sont disposés au moins par sections dans la zone d'une périphérie extérieure et/ou d'un côté avant de la jante (12) de volant de direction tourné vers le conducteur sous le revêtement (54) et sont évidés au moins dans les zones des éléments d'éclairage (36, 38).
